# EUROPEAN PATENT APPLICATION

(11) **EP 2 290 229 A2**
(43) Date of publication of application: **02.03.2011**
(21) Application number: 10173476.2
(22) Date of filing: 19.08.2010
(51) Int. Cl.: F03D 7/02, F03D 11/00

(54) **Systems and methods for assembling a pitch assembly for use in a wind turbine**

(30) Priority: 31.08.2009 US 551248
(71) Applicant: General Electric Company, Schenectady, NY 12345 (US)
(72) Inventor: Daniels, Jeffrey Michael, Schenectady, NY 12345 (US); Korim, David Charles, Schenectady, NY 12345 (US)
(74) Representative: Bedford, Grant Richard

(57) **Abstract**

A pitch assembly (130) for use in a wind turbine (100) including a plurality of blades (112) is provided. The pitch assembly includes a pitch bearing (160) rotatably coupled to a hub (110) of the wind turbine, the pitch bearing including a plurality of bearing teeth (188), a pitch drive system (180) coupled to the pitch bearing and in contact with a first set of the plurality of bearing teeth, and a plurality of bearing segments (162), at least one of the plurality of bearing segments coupled to the pitch bearing to cause the pitch drive system to selectively contact a second set of bearing teeth (270).

## Description

The embodiments described herein relate generally to methods and systems for assembling a wind turbine including a pitch system, and more particularly, to systems and methods for assembling a pitch assembly for use in wind turbines.

At least some known wind turbines include a bearing coupled between a blade and a hub, and a pitch drive system for use in positioning the blade attached to the bearing. The pitch drive system is operated to adjust the pitch of the blade. Over time, the pitch bearing teeth of the bearing may become worn. As the pitch bearing teeth become worn, the pitch drive system becomes less effective in operating to adjust the pitch of the blades. In some cases, the pitch bearing teeth can fail resulting in the inability of the pitch drive system to rotate the blade. In at least some known wind turbines the entire hub and rotor must be removed from the wind turbine, prior to removing each blade and adjusting the pitch bearing to engage new pitch bearing teeth. In some wind turbines, the blades are between 60 and 100 meters in length, and as such, replacing bearings with worn teeth can be costly and time-consuming.

During operation, worn pitch bearing teeth may enable a blade to undesirably move from a desired pitch setting. In some cases, the blades of the wind turbine asymmetrically load the hub and rotor shaft, and may cause the rotor to become imbalanced. Depending on the extent of the rotor imbalances, increased loads may be induced to the rotor and other drive train components. Moreover, the rotor's position with respect to the wind may induce increased loads on the rotor and other drive train components.

Accordingly, it is desirable to provide a system and method capable of adjusting the pitch drive system without removing the hub and/or rotor from the wind turbine.

In one aspect according to the present invention, a method of assembling a pitch assembly for use in a wind turbine is provided. The method includes coupling a pitch bearing a hub of the wind turbine, wherein the pitch bearing includes a plurality of bearing teeth. A pitch drive system is coupled to the pitch bearing such that the pitch drive system contacts a first set of bearing teeth. A plurality of bearing segments is coupled to the pitch bearing to cause the pitch drive system to selectively contact a second set of bearing teeth.

In another aspect, a pitch assembly for use in a wind turbine is provided. The pitch assembly includes a pitch bearing rotatably coupled to a hub of the wind turbine, wherein the pitch bearing comprises a plurality of bearing teeth. A pitch drive system is coupled to the pitch bearing and in contact with a first set of the plurality of bearing teeth. At least one of a plurality of bearing segments is coupled to the pitch bearing to cause the pitch drive system to selectively contact a second set of bearing teeth.

In still another aspect, a wind turbine is provided. The wind turbine includes a hub and at least one blade configured to rotate about a pitch axis. A pitch bearing is rotatably coupled to the hub and includes a plurality of bearing teeth. A pitch drive system is coupled to the pitch bearing and is in contact with a first set of the plurality of bearing teeth. At least one of a plurality of bearing segments is coupled to the pitch bearing for causing the pitch drive system to selectively engage a second set of bearing teeth.

The embodiments described herein facilitate adjusting the pitch drive system without requiring the hub and/or rotor to be removed from the wind turbine. More specifically, the pitch assembly described herein enables a blade to be selectively rotated relative to the pitch bearing such that the pitch drive can engage new pitch bearing teeth without removing the hub and/or rotor from the wind turbine.

Figures 1-4 illustrate exemplary embodiments of the systems and methods described herein, in which:
Figure 1 is a schematic view of an exemplary wind turbine generator.
Figure 2 is a cross-sectional schematic view of an exemplary nacelle that may be used with the wind turbine generator shown in Figure 1.
Figure 3 is a perspective view of an exemplary pitch assembly that may be used with the wind turbine generator shown in Figure 1.
Figure 4 is an enlarged schematic view of an exemplary bearing segment that may be used with the pitch assembly shown in Figure 3.

The embodiments described herein include a wind turbine system that enables the maintenance of the pitch bearing assembly without requiring the hub and/or rotor of the wind turbine to be removed. More specifically, the pitch assembly described herein enables the pitch drive to be moved to engage new pitch bearing teeth.

As used herein, the term "blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power.

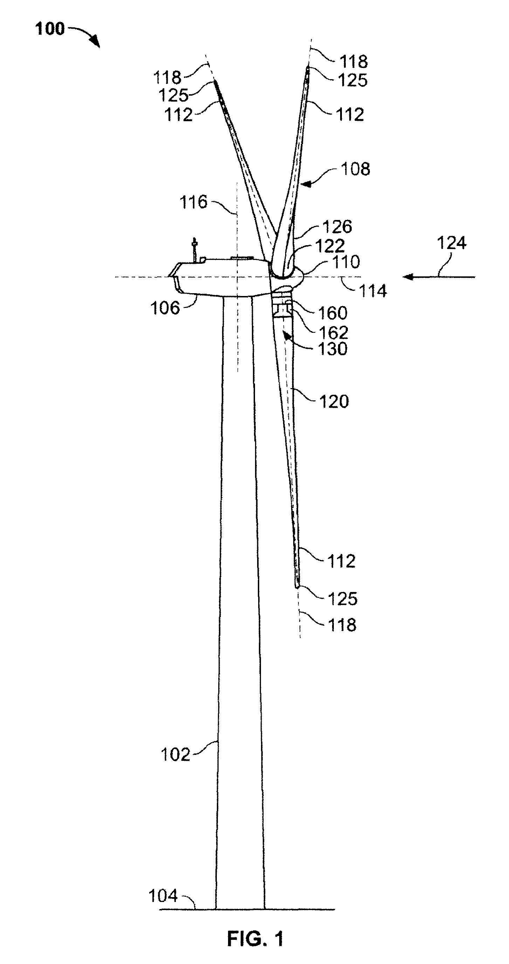

Figure 1 is a schematic view of an exemplary wind turbine generator 100. In the exemplary embodiment, wind turbine generator 100 is a horizontal-axis wind turbine. Alternatively, wind turbine 100 may be a vertical-axis wind turbine. In the exemplary embodiment, wind turbine 100 includes a tower 102 extending from and coupled to a supporting surface 104. Tower 102 is coupled to surface 104 by either anchor bolts or via a foundation mounting piece (neither shown). A nacelle 106 is coupled to tower 102, and a rotor 108 is coupled to nacelle 106. Rotor 108 includes a rotatable hub 110 and a plurality of rotor blades 112 coupled to hub 110. In the exemplary embodiment, rotor 108 includes three rotor blades 112. Alternatively, rotor 108 may have any number of rotor blades 112 that enable wind turbine generator 100 to function as described herein. Tower 102 is any suitable height or construction that enables wind turbine generator 100 to function as described herein.

Rotor blades 112 are spaced about rotor hub 110 to facilitate rotating rotor 108, thereby transferring kinetic energy from wind 124 into usable mechanical energy, and subsequently, electrical energy. Rotor 108 and nacelle 106 are rotated about tower 102 on a yaw axis 116 to control the perspective of rotor blades 112 with respect to the direction of wind 124. Rotor blades 112 are mated to hub 110 by coupling a blade root portion 120 to hub 110 at a plurality of load transfer regions 122. Load transfer regions 122 each have a hub load transfer region and a blade load transfer region (both not shown in Figure 1). Loads induced to rotor blades 112 are transferred to hub 110 via load transfer regions 122. Each rotor blade 112 also includes a blade tip portion 125.

In the exemplary embodiment, rotor blades 112 have a length of between 30 meters (m) (98 feet (ft)) and 50 m (164 ft). Alternatively, rotor blades 112 may have any length that enables wind turbine generator to function as described herein. As wind 124 contacts each rotor blade 112, blade lift forces are induced to each rotor blade 112 and rotation of rotor 108 about an axis of rotation 114 is induced as blade tip portions 125 are accelerated.

A pitch angle (not shown) of rotor blades 112, i.e., an angle that determines a perspective of each rotor blade 112 with respect to a direction of wind 124, may be changed by a pitch assembly 130. Specifically, increasing a pitch angle of rotor blade 112 decreases an amount of blade surface area 126 exposed to wind 124 and, conversely, decreasing a pitch angle of rotor blade 112 increases an amount of blade surface area 126 exposed to wind 124. The pitch angles of rotor blades 112 are adjusted about a pitch axis 118 for each rotor blade 112. In the exemplary embodiment, the pitch angles of rotor blades 112 are controlled individually. Alternatively, rotor blades' 112 pitch may be controlled as a group.

Wind turbine 100 also includes a pitch assembly 130 that includes a pitch bearing 160 and a plurality of bearing segments 162. In the exemplary embodiment, wind turbine 100 includes three pitch assemblies 130 that correspond with each rotor blade 112. Alternatively, wind turbine 100 includes any number of pitch assemblies 130 that correspond to the number of rotor blades 112 that enable wind turbine 100 to function as described herein. Pitch bearing 160 is coupled to hub 110 and to bearing segments 162, and is positioned between hub 110 and bearing segments 162. Bearing segments 162 are also coupled to rotor blade 112 and are positioned between pitch bearing 160 and rotor blade 112. More specifically, bearing segments 162 are coupled to rotor blade root portion 120. In the exemplary embodiment, pitch bearing 160 adjusts the pitch angle of rotor blade 112 by rotating rotor blade 112 about pitch axis 118. Bearing segments 162 rotate rotor blade 112 about pitch axis 118 and relative to pitch bearing 160.

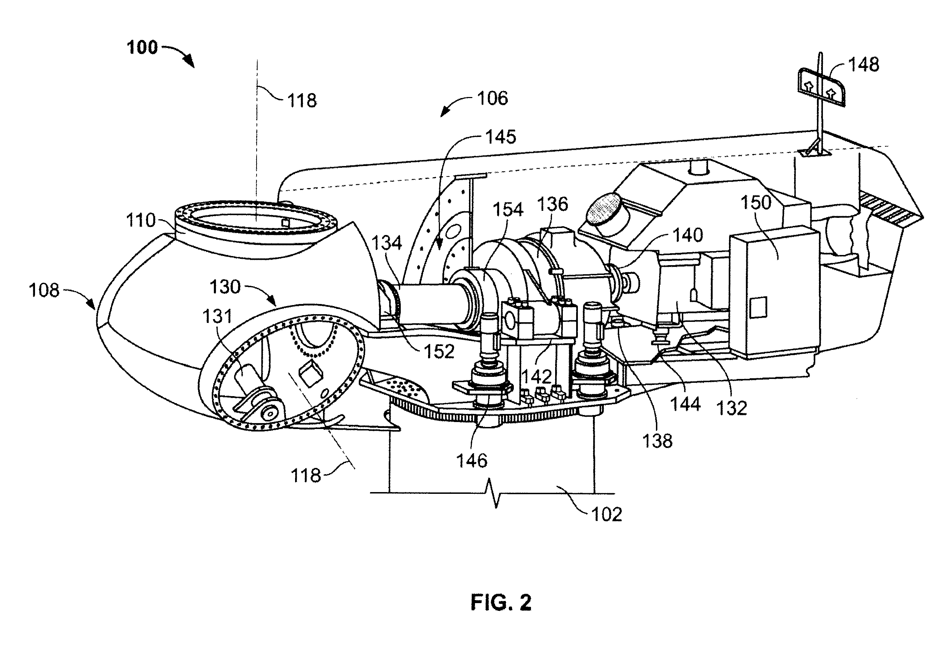

Figure 2 is a cross-sectional schematic view of nacelle 106 of exemplary wind turbine 100. Various components of wind turbine 100 are housed in wind turbine nacelle 106. In the exemplary embodiment, nacelle 106 includes one pitch assembly 130 that is coupled to one rotor blade 112 (shown in Figure 1), wherein pitch assembly 130 modulates the pitch of associated rotor blade 112 along pitch axis 118. Only one of three pitch assemblies 130 is illustrated in Figure 2. In the exemplary embodiment, each pitch assembly 130 includes at least one pitch drive motor 131. Pitch drive motor 131 is any motor driven by electrical power that enables pitch assembly 130 to function as described herein. Alternatively, pitch assembly 130 may include any suitable structure, configuration, arrangement, and/or components such as, but not limited to, hydraulic cylinders, springs, and/or servo-mechanisms. Moreover, pitch assembly 130 may be driven by any suitable means such as, but not limited to, hydraulic fluid, and/or mechanical power, such as, but not limited to, induced spring forces and/or electromagnetic forces.

Nacelle 106 also includes a rotor 108 that is rotatably coupled to an electric generator 132 positioned within nacelle 106 via rotor shaft 134 (sometimes referred to as either a main shaft or a low speed shaft), a gearbox 136, a high speed shaft 138, and a coupling 140. Rotation of shaft 134 rotatably drives gearbox 136 that subsequently drives high speed shaft 138. High speed shaft 138 rotatably drives generator 132 via coupling 140 and high speed shaft 138 rotation facilitates generator 132 production of electrical power. Gearbox 136 and generator 132 are supported by supports 142 and 144, respectively. In the exemplary embodiment, gearbox 136 utilizes a dual path geometry to drive high speed shaft 138. Alternatively, rotor shaft 134 is coupled directly to generator 132 via coupling 140.

Nacelle 106 also includes a yaw drive mechanism 146 that may be used to rotate nacelle 106 and rotor 108 on yaw axis 116 (shown in Figure 1) to control the perspective of rotor blades 112 with respect to the direction of wind 124. Nacelle 106 also includes at least one meteorological mast 148 that includes a wind vane and anemometer (neither shown in Figure 2). Mast 148 provides information to a turbine control system 150 that may include wind direction and/or wind speed. Pitch assembly 130 is coupled to control system 150 for control thereby. In the exemplary embodiment, nacelle 106 also includes main, or forward and aft, support bearings 152 and 154, respectively. Support bearings 152 and 154 facilitate radial support and alignment of rotor shaft 134. Forward support bearing 152 is coupled to rotor shaft 134 near hub 110. Aft support bearing 154 is positioned on rotor shaft 134 near gearbox 136 and/or generator 132. Alternatively, nacelle 106 includes any number of support bearings that enable wind turbine 100 to function as disclosed herein. Rotor shaft 134, generator 132, gearbox 136, high speed shaft 138, coupling 140, and any associated fastening, support, and/or securing device including, but not limited to, supports 142 and 144, and support bearings 152 and 154, are sometimes referred to as a drive train 145.

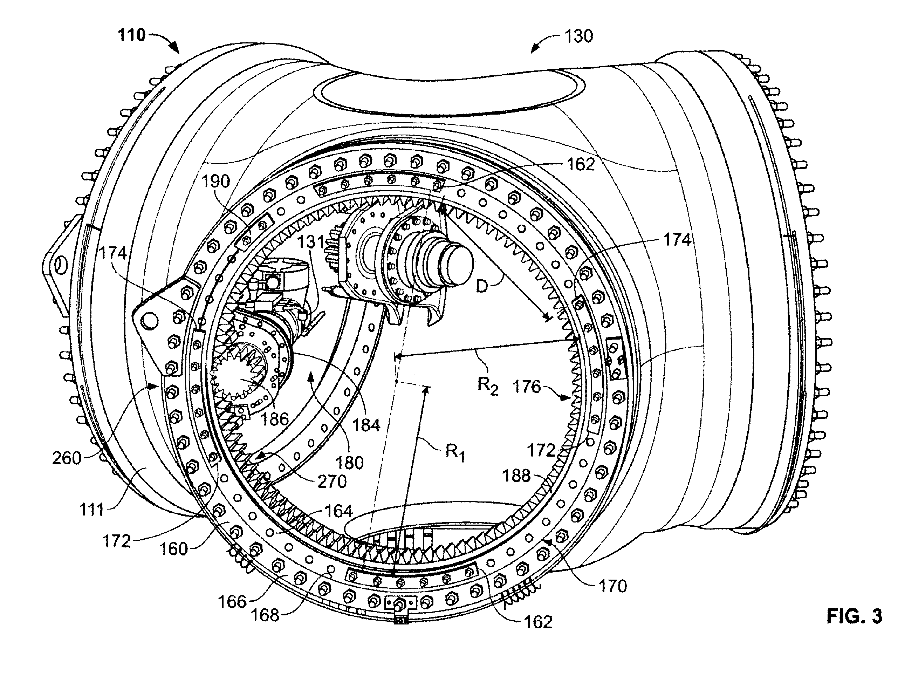

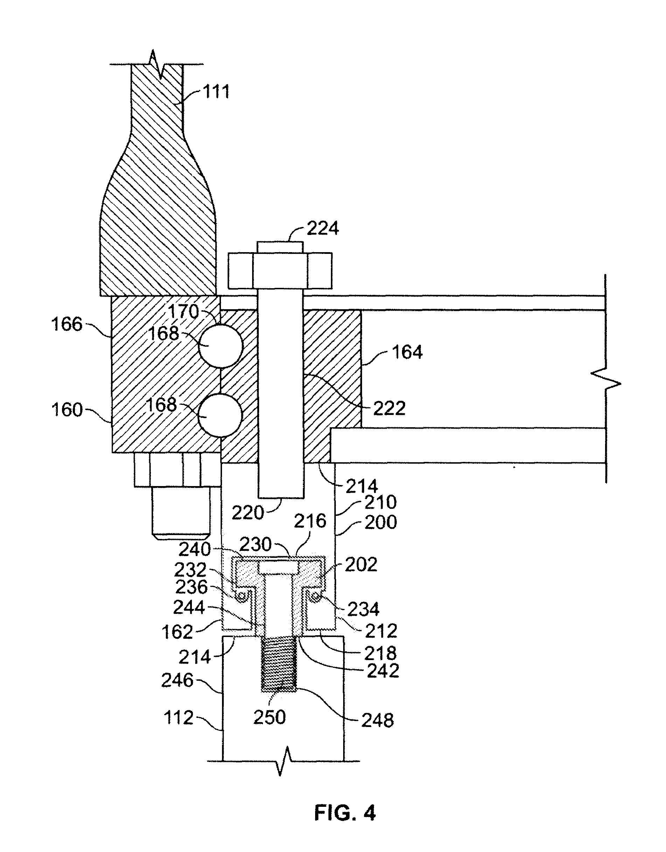

Figure 3 is a perspective view of pitch assembly 130. Figure 4 is an enlarged schematic view of bearing segment 162. In the exemplary embodiment, pitch assembly 130 includes pitch bearing 160 and a plurality of bearing segments 162. Each rotor blade 112 is rotatable about pitch axis 118. Pitch bearing 160 is rotatably coupled to a hub outer wall 111, such that pitch bearing 160 is rotatable about pitch axis 118. Pitch bearing 160 includes an inner race 164 and an outer race 166. Inner race 164 is radially inward from outer race 166 and is aligned substantially concentrically to outer race 166. Inner race 164 is rotatably coupled to outer race 166 such that inner race 164 rotates relative to outer race 166 about pitch axis 118. Inner race 164 has a radius R₁. Outer race 166 is securely coupled to hub outer wall 111. More specifically, in the exemplary embodiment, outer race 166 is coupled to outer wall 111 using a plurality of bolts and nuts. Alternatively, outer race 166 is coupled to outer wall 111 via methods that include, but are not limited to, retention hardware, welds, and/or sealing methods and apparatus known in the art. An annular groove 168 is defined between inner race 164 and outer race 166 and includes at least one material 170 that facilitates reducing friction between inner race 164 and outer race 166. Material 170 is at least one of bearing balls, rollers, or a lubricant.

A plurality of bearing segments 162 are coupled to inner race 164. In the exemplary embodiment, bearing segments 162 are equally spaced a circumferential distance D apart from each other about inner race 164. In an alternative embodiment, bearing segments 162 are spaced at any distance that enables pitch assembly 130 to function as described herein. In the exemplary embodiment, bearing segments 162 are removably coupled to inner race 164 using a plurality of bolts. Alternatively, bearing segments 162 may be coupled to inner race 164 via methods that include, but are not limited to, retention hardware, and sealing methods such that bearing segments 162 are removably coupled to inner race 164.

Bearing segments 162 have a generally arcuate shape defined by a radius R₂ that is substantially similar to radius R₁ of inner race 164. Bearing segments 162 are oriented substantially concentrically to outer race 166 and inner race 164 and are rotatable about pitch axis 118. Bearing segments 162 include a first portion 172 and an second portion 174. Each rotor blade 112 is removably coupled to bearing segments 162 such that bearing segments 162 rotate rotor blade 112 about pitch axis 118. Rotor blade 112 is removably coupled to bearing segments 162 using a plurality of bolts. Alternatively, rotor blade 112 may be coupled to bearing segments 162 using any methods known in the art that enable rotor blade 112 to be removed from bearing segments 162.

In an alternative embodiment, inner race 164 is securely coupled to hub outer wall 111. In such an embodiment, outer race 166 is rotatably coupled to inner race 164, such that outer race 166 rotates relative to inner race 164. In this alternative embodiment, bearing segments 162 are coupled to outer race 166.

Pitch assembly 130 also includes a pitch drive system 180. Pitch drive system 180 includes a pitch drive motor 131, pitch drive gearbox 184, and pitch drive pinion 186. Pitch drive motor 131 is coupled to pitch drive gearbox 184 such that pitch drive motor 131 imparts mechanical force to pitch drive gearbox 184. Pitch drive gearbox 184 is coupled to pitch drive pinion 186 such that pitch drive pinion 186 is rotated by pitch drive gearbox 184. Inner race 164 includes a plurality of pitch bearing teeth 188 spaced circumferentially about inner race 164. Pitch bearing teeth 188 engage pitch drive pinion 186 such that the rotation of pitch drive pinion 186 causes rotation of inner race 164 of pitch bearing 160. Pitch drive system 180 is coupled to control system 150 (shown in Figure 2) for adjusting the pitch angle of rotor blade 112 upon receipt of a signal from control system 150. Pitch drive motor 131 includes any suitable structure, configuration, arrangement, means, and/or components, such as, but not limited to, electrical motors, hydraulic cylinders, springs, and/or servo-mechanisms. Moreover, pitch drive motor 131 is driven by any suitable means, such as, but not limited to, hydraulic fluid, electrical power, electro-chemical power, and/or mechanical power, such as, but not limited to, spring force. In some embodiments, pitch drive motor 131 is driven by energy extracted from at least one of a rotational inertia of rotor 108 and a stored energy source (not shown) that supplies energy to components of wind turbine 100.

Pitch drive system 180 uses pitch drive motor 131 to change the pitch angle of rotor blades 112 by rotating rotor blades 112 with respect to hub 110 and outer race 166. More specifically, in the exemplary embodiment, pitch drive pinion 186 is coupled to pitch bearing 160 such that rotation of pitch drive gearbox 184 rotates pitch bearing 160, bearing segment 162, and rotor blade 112 about pitch axis 118 to change the pitch of blade 112. During operation of wind turbine 100, pitch drive system 180 rotates each rotor blade 112 a limited distance about pitch axis 118, such that pitch drive pinion 186 contacts a limited number of pitch bearing teeth 188.

Pitch assembly 130 also includes an actuator 190 that is coupled to an second portion 174 of bearing segments 162 for rotating rotor blade 112 about pitch axis 118. In the exemplary embodiment, actuator 190 is coupled to at least one bearing segment 162. In an alternative embodiment, actuator 190 may be coupled to rotor blade 112. In another embodiment, pitch assembly 130 includes a plurality of actuators 190 that are each coupled to a corresponding bearing segment 162. In the exemplary embodiment, actuator 190 is also coupled to inner race 164 to rotate bearing segment 162 relative to inner race 164. In an alternative embodiment, actuator 190 is also coupled to outer race 166. In a further embodiment, actuator 190 is also coupled to hub 110 at any suitable location that enables actuator 190 to function as described herein.

At least one bearing segment 162 is positioned adjacent to inner race 164 along pitch axis 118, such that bearing segment 162 is between inner race 164 and rotor blade 112. Bearing segment 162 includes a first member 200 and a second member 202 that is slideably coupled to first member 200 such that second member 202 is movable relative to first member 200. First member 200 is also securely coupled to inner race 164 such that rotation of inner race 164 causes rotation of first member 200. Second member 202 is also securely coupled to rotor blade 112 such that rotation of rotor blade 112 moves second member 202 relative to first member 200. In an alternative embodiment, at least one bearing segment 162 is positioned adjacent outer race 166 along pitch axis 118, such that bearing segment 162 is between outer race 166 and rotor blade 112.

First member 200 includes an upper portion 210 and a lower portion 212. First member 200 also includes an upper surface 214, an interior surface 216, and a lower surface 218. A plurality of bores 220 are defined within upper portion 210 and each extends from upper surface 214 towards lower portion 212. In the exemplary embodiment, each bore 220 is oriented in a row 176 that extends from first portion 172 towards second portion 174. In an alternative embodiment, each bore 220 is oriented in any location that enables pitch assembly 130 to function as described herein.

Inner race 164 includes a plurality of openings 222 that correspond to at least one bore 220. Each opening 222 and bore 220 are sized to receive a bolt 224 therethrough, such that bolt 224 extends into one bore 220 to couple first member 200 to inner race 164. A first annular space 230 is defined within lower portion 212 and extends along an entire length of first member 200. First annular space 230 is sized and oriented to receive second member 202 therein. In the exemplary embodiment, first annular space 230 is a T-shaped opening and second member 202 is a T-shaped bracket 232. In an alternative embodiment, first annular space 230 is a C-shaped opening and second member 202 is a corresponding C-shaped bracket 232. A plurality of bearings 234 are positioned between first member 200 and second member 202. Bearings 234 facilitate reducing frictional forces between first member 200 and second member 202. First member 200 includes an annular space 236 that is sized and oriented to receive bearings 234. In the exemplary embodiment, bearings 234 are ball bearings. In an alternative embodiment, bearings 234 are roller bearings, a combination of ball bearings and roller bearings, or low friction pads. In another alternative embodiment, second member 202 includes annular space 236 that is sized and oriented to receive at least a portion of the plurality of bearings 234.

Second member 202 includes an upper surface 240 and a lower surface 242. In the exemplary embodiment, second member 202 is inserted into first member 200 such that upper surface 240 is positioned proximate to first member interior surface 216. Second member 202 includes a plurality of bores 244 that extend from lower surface 242 towards first member 200. Rotor blade 112 includes a flange 246 that includes a plurality of openings 248 defined therein that correspond to at least one lower bore 244. In the exemplary embodiment, at least one lower bore 244 is aligned with at least one opening 248, such that a bolt 250 may be inserted into the at least one lower bore 244 and into opening 248. Bolt 250 is inserted into opening 248 and lower bore 244 to securely couple second member 202 to rotor blade 112. In the exemplary embodiment, rotor blade 112 includes an upper surface 214 and is positioned adjacent to bearing segment 162 along pitch axis 118, such that rotor blade upper surface 214 is proximate to first member lower surface 218 and to second member lower surface 242. As used herein, the term "proximate" means at or near.

During operation of pitch drive system 180, a first set 260 of pitch bearing teeth 188 that contact pitch drive pinion 186 may become worn and may not be able to translate rotational force from pitch drive system 180 to pitch bearing 160. Therefore, it becomes necessary to rotate pitch bearing 160 such that pitch drive pinion 186 is realigned adjacent to a second set 270 of pitch bearing teeth 188. In the exemplary embodiment, upon receipt of a signal from control system 150, pitch drive system 180 rotates pitch bearing 160 in a first direction. Actuator 190 rotates bearing segments 162 in a second opposite direction about pitch axis 118. More specifically, actuator 190 is coupled to second member 202 and operates to rotate second member 202 in the second direction about pitch axis 118 relative to pitch bearing 160. Rotation of bearing segment 162 causes rotation of rotor blade 112 about pitch axis 118 in the second opposite direction, such that rotor blade 112 and pitch bearing 160 rotate in opposite directions about pitch axis 118 relative to each other. Rotor blade 112 is rotated to a position substantially similar to the initial position of the rotor blade 112. As pitch drive system 180 rotates pitch bearing 160, pitch bearing 160 is rotated such that new pitch bearing teeth 188, or second set 270 of pitch bearing teeth 188, engage pitch drive pinion 186. In an alternative embodiment, rotor blade 112 and second member 202 are held in a fixed position while pitch bearing 160 is rotated about pitch axis 118 relative to rotor blade 112. In another embodiment, pitch bearing 160 is held in a fixed position while rotor blade 112 is rotated about pitch axis 118 relative to pitch bearing 160. After pitch bearing 160 has been rotated, pitch drive pinion 186 contacts second set of pitch bearing teeth 270. Rotor blade 112 is then coupled directly to pitch bearing 160 and bearing segments 162 are removed from rotor blade 112 and pitch bearing 160.

The above-described systems and methods facilitate maintaining the pitch drive system without removing a hub and rotor blade from a wind turbine. More specifically, the bearing segments coupled to the pitch bearing to facilitate moving a pitch drive assembly to contact new pitch bearing teeth. In addition, the bearing segments coupled to the rotor blade enable the rotor blade to rotate in an opposite direction relative to the pitch bearing. The rotation of the pitch bearing enables the pitch drive pinion to contact new pitch bearing teeth while the rotor blade is moved to a position substantially similar to the rotor blades initial orientation. The ability to maintain the pitch assembly without removing the hub and rotor blade from the wind turbine eliminates the need for lifting cranes required to remove the blades. As such, the cost and manpower required to maintain the pitch assembly in a wind turbine is significantly reduced. Reducing such costs extends the operational life expectancies of wind turbine pitch assemblies.

Exemplary embodiments of systems and methods for assembling a pitch assembly for use in a wind turbine are described above in detail. The systems and methods are not limited to the specific embodiments described herein, but rather, components of systems and/or steps of the methods may be utilized independently and separately from other components and/or steps described herein. For example, the methods may also be used in combination with other wind turbine generators, and are not limited to practice with only the wind turbine generator as described herein. Rather, the exemplary embodiment can be implemented and utilized in connection with many other wind turbine generator applications.

Although specific features of various embodiment of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following number clauses:
1. A method of assembling a pitch assembly for use in a wind turbine having a plurality of blades, said method comprising:
   coupling a pitch bearing to a hub of the wind turbine, wherein the pitch bearing includes a plurality of bearing teeth;
   coupling a pitch drive system to the pitch bearing such that the pitch drive system contacts a first set of bearing teeth; and,
   coupling a plurality of bearing segments to the pitch bearing to cause the pitch drive system to selectively contact a second set of bearing teeth.
2. A method in accordance with clause 1, wherein the pitch bearing includes an inner race and an outer race, said method further comprising:
   coupling the outer race an outer wall of the hub;
   coupling the inner race to the plurality of bearing segments; and,
   coupling at least one blade to the plurality of bearing segments such that the plurality of bearing segments are retained between the pitch bearing and the at least one blade.
3. A method in accordance with any preceding clause further comprising coupling an actuator to at least one of the plurality of bearing segments for selectively rotating the bearing segment about the pitch axis.
4. A method in accordance with any preceding clause, wherein the pitch bearing includes an inner race and an outer race, said method further comprising:
   coupling the inner race to outer wall of the hub;
   coupling the outer race to the plurality of bearing segments; and,
   coupling at least one blade to the plurality of bearing segments, such that the plurality of bearing segments are retained between the pitch bearing and the at least one blade.
5. A pitch assembly for use in a wind turbine including a plurality of blades, said pitch assembly comprising:
   a pitch bearing rotatably coupled to a hub of the wind turbine, said pitch bearing comprising a plurality of bearing teeth,
   a pitch drive system coupled to said pitch bearing and in contact with a first set of said plurality of bearing teeth; and,
   a plurality of bearing segments, at least one of said plurality of bearing segments coupled to said pitch bearing to cause said pitch drive system to selectively contact a second set of bearing teeth.
6. A pitch assembly in accordance with any preceding clause, wherein said pitch drive system rotates said pitch bearing in a first direction, said at least one bearing segment is coupled to the at least one blade for rotating the at least one blade in a second direction that is opposite the first direction.
7. A pitch assembly in accordance with any preceding clause, wherein said pitch bearing comprises:
   an inner race; and,
   an outer race radially outward from said inner race, said outer race coupled to the hub, said inner race coupled to said at least one bearing segment.
8. A pitch assembly in accordance with any preceding clause, wherein said at least one bearing segment is between said pitch bearing and the at least one blade.
9. A pitch assembly in accordance with any preceding clause further comprising an actuator coupled to one of said at least one bearing segment and the at least one blade, said actuator configured to rotate said bearing segment about said pitch axis.
10. A pitch assembly in accordance with any preceding clause, wherein said at least one bearing segment comprises:
   a first member comprising an annular space defined therein; and,
   a second member rotatably coupled to said first member, said second member received at least partially in said annular space and rotatable relative to said first member.
11. A pitch bearing assembly in accordance with any preceding clause, wherein said first member is coupled to said pitch bearing such that said first member is rotatable relative to said second member, said second member is coupled to the at least one blade for rotating the blade relative to said first member.
12. A pitch bearing assembly in accordance with any preceding clause, wherein said first member comprises a plurality of bores defined therein, said first member is coupled to said pitch bearing with at least one fastener inserted through at least one of said plurality of bores.
13. A pitch assembly in accordance with any preceding clause, wherein said pitch bearing comprises:
   an inner race; and,
   an outer race radially outward from said inner race, said outer race coupled to said at least one bearing segment, said inner race coupled to the hub outer wall.
14. A wind turbine comprising:
   a hub;
   at least one blade configured to rotate about a pitch axis;
   a pitch bearing rotatably coupled to said hub, said pitch bearing comprising a plurality of bearing teeth;
   a pitch drive system coupled to said pitch bearing and in contact with a first set of said plurality of bearing teeth; and,
   a plurality of bearing segments, at least one of said plurality of bearing segments coupled to said pitch bearing for causing said pitch drive system to selectively engage a second set of bearing teeth.
15. A wind turbine in accordance with any preceding clause, wherein said pitch bearing rotates in a first direction, said at least one bearing segment coupled to said at least one blade for rotating the at least one blade in a second direction that is opposite to a first direction.
16. A wind turbine in accordance with any preceding clause, wherein said pitch bearing comprises:
   an inner race; and,
   an outer race radially outward from said inner race, said outer race coupled to said hub, said inner race coupled to said at least one bearing segment, such that said at least one bearing segment is between said pitch bearing and said at least one blade.
17. A wind turbine in accordance with any preceding clause further comprising an actuator coupled to at least one of said at least one bearing segment and said at least one blade, said actuator configured to rotate said at least one blade about the pitch axis.
18. A wind turbine in accordance with any preceding clause, wherein said at least one bearing segment comprises:
   a first member comprising an annular space defined therein; and,
   a second member rotatably coupled to said first member, said second member insertable into said first member annular space and configured to rotate relative to said first member, said first member is coupled to said pitch bearing, said pitch bearing configured to rotate said first member relative to said second member, said second member fixedly coupled to said at least one blade, said second member configured to rotate said at least one blade relative to said first member.
19. A wind turbine in accordance with any preceding clause, wherein said first member comprises a plurality of first bores, said first member is coupled to said pitch bearing via at least one fastener inserted through at least one of said plurality of first bores, wherein said second member comprises a plurality of second bores, said second member is coupled to said at least one blade using at least one of said plurality of second bores.
20. A wind turbine in accordance with any preceding clause, wherein said pitch bearing comprises:
   an inner race coupled to said hub outer wall; and,
   an outer race coupled to said at least one bearing segment, said outer race positioned outward from said inner race and oriented substantially concentrically thereto, wherein said at least one bearing segment is positioned adjacent to said outer race and is between said pitch bearing and said at least one blade.

## Claims

1. A pitch assembly (130) for use in a wind turbine (100) including a plurality of blades (112), said pitch assembly comprising:
a pitch bearing (160) rotatably coupled to a hub (110) of the wind turbine, said pitch bearing comprising a plurality of bearing teeth (188),
a pitch drive system (180) coupled to said pitch bearing and in contact with a first set of said plurality of bearing teeth; and,
a plurality of bearing segments (162), at least one of said plurality of bearing segments coupled to said pitch bearing to cause said pitch drive system to selectively contact a second set of bearing teeth (270).

2. A pitch assembly (130) in accordance with claim 1, wherein said pitch drive system (180) rotates said pitch bearing (160) in a first direction, said at least one bearing segment (162) is coupled to the at least one blade (112) for rotating the at least one blade in a second direction that is opposite the first direction.

3. A pitch assembly (130) in accordance with any preceding claim, wherein said pitch bearing (160) comprises:
an inner race (164); and,
an outer race (166) radially outward from said inner race, said outer race coupled to the hub (110), said inner race coupled to said at least one bearing segment (162).

4. A pitch assembly (130) in accordance with any preceding claim, wherein said at least one bearing segment (162) is between said pitch bearing (160) and the at least one blade (112).

5. A pitch assembly (130) in accordance with any preceding claim further comprising an actuator (190) coupled to one of said at least one bearing segment (162) and the at least one blade (112), said actuator configured to rotate said bearing segment about said pitch axis (118).

6. A pitch assembly (130) in accordance with any preceding claim, wherein said at least one bearing segment (162) comprises:
a first member (200) comprising an annular space (230) defined therein; and,
a second member (202) rotatably coupled to said first member, said second member received at least partially in said annular space and rotatable relative to said first member.

7. A pitch bearing (130) assembly in accordance with any preceding claim, wherein said first member (300) is coupled to said pitch bearing (160) such that said first member is rotatable relative to said second member (202), said second member is coupled to the at least one blade (112) for rotating the blade relative to said first member.

8. A pitch bearing assembly (130) in accordance with any preceding claim, wherein said first member (200) comprises a plurality of bores (220) defined therein, said first member is coupled to said pitch bearing (160) with at least one fastener inserted through at least one of said plurality of bores.

9. A pitch assembly in accordance with any preceding claim, wherein said pitch bearing comprises:
an inner race (164); and,
an outer race (166) radially outward from said inner race, said outer race coupled to said at least one bearing segment (162), said inner race coupled to the hub outer wall (111).

10. A wind turbine (100) comprising:
a hub (110);
at least one blade (112) configured to rotate about a pitch axis (118);
a pitch bearing (160) rotatably coupled to said hub, said pitch bearing comprising a plurality of bearing teeth (188);
a pitch drive system (180) coupled to said pitch bearing and in contact with a first set of said plurality of bearing teeth; and,
a plurality of bearing segments (162), at least one of said plurality of bearing segments coupled to said pitch bearing for causing said pitch drive system to selectively engage a second set of bearing teeth (270).
